(19)

Europäisches Patentamt

European Patent Office

Office européen des brevets

(11) **EP 3 223 094 A1**

(12) **EUROPÄISCHE PATENTANMELDUNG**

(43) Veröffentlichungstag:
27.09.2017   Patentblatt 2017/39

(51) Int Cl.:
***G05B 19/416*** *(2006.01)*

(21) Anmeldenummer: **17155768.9**

(22) Anmeldetag: **13.02.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **16.02.2016   DE 102016001725**

(71) Anmelder: **Ulrich GmbH & Co. KG**
**89081 Ulm (DE)**

(72) Erfinder:
• **Bohnacker, Lukas**
  **89143 Blaubeuren (DE)**
• **Engelhardt, Marc**
  **89160 Dornstadt (DE)**
• **Münz, Jannik**
  **88471 Laupheim (DE)**

(74) Vertreter: **Charrier Rapp & Liebau**
**Patentanwälte**
**Fuggerstrasse 20**
**86150 Augsburg (DE)**

(54) **STEUEREINRICHTUNG FÜR EINE CNC-FRÄSMASCHINE**

(57)    Die Erfindung betrifft eine Steuereinrichtung für eine CNC-Fräsmaschine (10) mit einer Vorrichtung zur Regelung des Vorschubs von deren rotierenden Fräser (1), der ein durch eine verwindungssteife Vorrichtung (2) ortsfest fixiertes Werkstück (3) bearbeitet, dadurch gekennzeichnet, dass die verwindungssteife Vorrichtung (2) ein Fest (4)- und ein Loslager (5) aufweist, wobei zwischen Festlager (4) und Fräser (1) ein wählbarer Abstand herrscht und wobei sich beim Loslager (5) in definiertem Abstand zum Festlager (4) eine Kraftmesseinrichtung (6) für die während des Fräsvorgangs auf den Fräser (1) einwirkenden mechanischen Kräfte befindet, wodurch die auf den Fräser (1) einwirkenden Kräfte auf eine Dimension abgebildet werden, dass die auf diese Weise erhaltene eindimensionale Kraft sowohl auf ihren absoluten Wert als auch auf ihr Schwingungsverhalten untersucht und mit hinterlegten Daten verglichen wird und dass die Regelung des Vorschubs nahezu in Echtzeit in der Weise erfolgt, dass sich die eindimensionale Kraft stets so weit wie möglich den dazu hinterlegten Daten folgt.

Figur 1

EP 3 223 094 A1

**Beschreibung**

Die Erfindung betrifft eine Steuereinrichtung für eine sogenannte Computerized Numerical Control (CNC)-Fräsmaschine nach dem Oberbegriff des Patentanspruchs 1.

Derartige Fräsmaschinen sind allgemein bekannt und werden zur zerspanenden Bearbeitung von Werkstücken eingesetzt. Dabei wird mit einem rotierenden Fräser bei einem variablen Vorschub und einer variablen Drehzahl eine zerspanende Bearbeitung des Werkstücks durchgeführt. Die Bewegung des Fräsers im Raum sowie sein Vorschub und seine Drehzahl werden dabei von einem Computerprogramm (NC-Programm) gesteuert. Während die Steuerung des Fräsers in Bezug auf seine Bewegung im Raum abhängig vom herzustellenden Werkstück eindeutig ist, hängt die Wahl des Vorschubs vom Material des Werkstücks und vom Werkstoff, Geometrie und Typ des Fräsers ab. In Bezug auf letzteres kann es sich beispielsweise um einen Fräser für eine Schrupp- oder Schlichtbearbeitung des Werkstücks handeln.

Die Wahl des Vorschubs kann vom Bediener der Fräsmaschine dabei auf der Grundlage von Erfahrungswerten durch manuelle Eingabe in die Steuereinrichtung festgelegt werden. Der Bediener kann dabei auch auf Tabellen zurückgreifen, wie sie beispielsweise im Europa Lehrmittel Tabellenbuch Metall (ISBN: 987-3-8085-1675-1) enthalten sind.

Die manuelle Wahl des Vorschubs weist den Nachteil auf, dass unabhängig von der tatsächlichen Belastung des Fräsers beim Zerspanungsvorgang stets die programmierte konstante Vorschubbewegung ausgeführt wird. Damit bleibt unberücksichtigt, dass der Fräser bei leichten Zerspanungsvorgängen schneller bewegt werden könnte, während er bei schweren Zerspanungsvorgängen langsamer bewegt werden sollte. Dies hat zur Folge, dass einerseits die Bearbeitungszeit des Werkstücks unnötig verlängert wird, beziehungsweise die Standzeit des Fräsers übermäßig verkürzt wird.

Aus der US 4078195 ist bereits bekannt, den Vorschub des Fräsers zu regeln. Dazu wird ein während der Bearbeitung beobachteter Parameter - wie zum Beispiel die mittels eines Kraftsensors gemessene Auslenkung der Spindel - als Maß für die Belastung des Fräsers herangezogen. Ein wesentlicher Nachteil dieser Methode besteht in dem Kostenaufwand für die Ausstattung der jeweiligen Aufnahme für jeden einzelnen Fräser mit einem Kraftsensor. Darüber hinaus weist auch diese bekannte Vorschubregelung den Nachteil auf, dass zu ihrem Einsatz jeweils gewisse Befehle in die verschiedenen verwendeten NC-Programme aufgenommen werden müssen, um die Vorschubregelung selbst zu steuern.

Zur Anpassung des Vorschubs an die tatsächlich vorliegenden Gegebenheiten in Bezug auf die Belastung des Fräsers ist weiterhin aus der DE 10 2005 041 175 A1 ein Verfahren zur adaptiven Vorschubregelung bekannt. Dabei wird der Vorschub des Fräsers in Abhängigkeit von der Stromaufnahme des Spindelmotors der Fräsmaschine geregelt und zwar auf die Weise, dass bei zu hoher Stromaufnahme der momentane Vorschub reduziert und bei Unterschreiten einer bestimmten unteren Grenze für die Stromaufnahme erhöht wird.

Ein Nachteil dieses Verfahrens besteht darin, dass es sich für leichte zerspanende Bearbeitungen und kleine Fräserdurchmesser praktisch nicht eignet, da in beiden Fällen die Änderungen in der Stromaufnahme des Spindelmotors gegenüber den ohnehin vorhandenen Schwankungen der Stromaufnahme dieses Motors zu gering sind. Ein weiterer grundsätzlicher Nachteil dieses Verfahrens besteht darin, dass die Zeitspanne bis zum Erkennen eines notwendigen oder möglichen Wechsels bei der Vorschubbewegung in vielen Fällen größer ist als die Zeitspanne, in der sich die Belastung des Fräsers merklich ändert.

Es war daher Aufgabe der Erfindung eine Steuereinrichtung für eine CNC-Fräsmaschine anzugeben, bei der eine Möglichkeit zur Erhöhung sowie auch die Notwendigkeit einer Verringerung des Vorschubs des Fräsers wesentlich schneller erkannt und auch durchgeführt wird. Weitere Aufgabe der Erfindung ist es, die Steuereinrichtung so auszugestalten, dass sie Änderungen des Vorschubs auch bei leichten Zerspanungsvorgängen und kleinen Werkzeugdurchmessern die genannten Änderungen des Vorschubs noch zuverlässig ausführen kann.

Diese Aufgabe wird durch die kennzeichnenden Merkmale des Patentanspruchs 1 gelöst. Erfindungsgemäß ist die verwindungssteife Vorrichtung, vorzugsweise ein Schraubstock, in welcher das Werkstück in üblicher Weise fixiert wird, nicht direkt auf dem Maschinentisch befestigt. Sie liegt viel mehr auf einer mit dem Maschinentisch verbundenen Kraftmesseinrichtung und einem Festlager auf und wird darüber hinaus mit einem Loslager gegen Verdrehen gesichert. Die verwindungssteife Vorrichtung ist dabei in Richtung der Z-Achse in sehr geringem Maße beweglich und lenkt dabei die Kraftmesseinrichtung aus. Durch diesen Aufbau wird es ermöglicht, dass die auf den Fräser einwirkenden Kräfte, wenn man sie jeweils in ihre X, Y und Z Komponenten zerlegt, nur auf eine einzige Komponente, nämlich die Z-Komponente abgebildet werden. Die Reduzierung eines dreidimensionalen Vektors auf eine einzige Komponente, und damit einen Skalar, erlaubt eine wesentlich schnellere Reaktion auf Belastungsänderungen des Fräsers durch das Regelungsprogramm.

Die erfindungsgemäße Regelung des Vorschubs ist unter anderem dann vorteilhaft, wenn große Stückzahlen ein und desselben Werkstücks möglichst zeitsparend und damit wirtschaftlich hergestellt werden sollen. Die Vorschubregelung beruht nämlich nicht auf von gewisser Vorsicht begleiteten Erfahrungswerten des Bedieners, die dann konstant durchgehalten werden, sondern richtet sich jeweils nach dem berechneten maximal verträglichen Vorschub.

Bildet man die Erfindung nach Anspruch 2 weiter, so ergibt sich der Vorteil, dass die Regelung des Vorschubs des Fräsers bereits beim ersten Fräsvorgang sehr nahe am erreichbaren Optimum in Bezug auf Vorschubgeschwindigkeit bei gleichzeitig möglichst langer Standzeit des Fräsers liegt. Dies ist besonders vorteilhaft, wenn nur geringe Stückzahlen eines Werkstücks gefertigt werden müssen.

Die Weiterbildung der Erfindung nach Anspruch 3 bietet den Vorteil, dass durch die Auswertung der Schwankungen der Amplitude der eindimensionalen Kraft auf Schwingungen des Fräsers geschlossen werden kann, die durch Änderung des Vorschubs oder der Drehzahl verringert werden können. Auf diese Weise kann ein dadurch verursachter Verschleiß des Fräsers minimiert werden. Darüber hinaus wird eine Beeinträchtigung der Werkstückoberfläche durch Schwingungen des Fräsers erheblich reduziert.

Die Ausführungsform der Erfindung nach Anspruch 4 bietet den Vorteil, dass eine unter Berücksichtigung der Lage des Fräsers in Bezug auf das Festlager erfolgende Auswertung des Absolutwertes der eindimensionalen Kraft die tatsächliche Belastung des Fräsers noch besser widerspiegelt.

Bildet man die Erfindung nach Anspruch 5 weiter, so lässt sich je nach Größe des Werkstücks die dazugehörige Kraftmessvorrichtung leicht daran anpassen.

Im Folgenden wird ein Ausführungsbeispiel der Erfindung anhand der Figuren näher beschrieben. Es zeigen:

Figur 1 in schematischer Weise die wesentlichen Bestandteile einer Fräsmaschine und deren zusammenwirken,

Figur 2a eine schematische Darstellung der erfindungsgemäßen Anordnung von Fräser, Werkstück, verwindungssteifer Vorrichtung, Kraftmesseinrichtung, sowie Fest- und Loslager und die Entstehung der dort wirkenden Kräfte,

Figur 2b einen Schnitt durch die erfindungsgemäße Anordnung von Maschinentisch, Schraubstock und dessen Lagerung auf dem Maschinentisch, sowie der Kraftmesseinrichtung,

Figur 3 ein Blockschaltbild zur Funktionsweise der Regeleinrichtung des Vorschubs,

Figur 4 den von der Kraftmesseinrichtung gemessenen zeitlichen Verlauf der Kraft in Z-Richtung und

Figur 5 den von dem Simulationsprogramm12 errechneten zeitlichen Verlauf der Kraft in Z-Richtung für den in Figur 4 gemessenen Kraftverlauf.

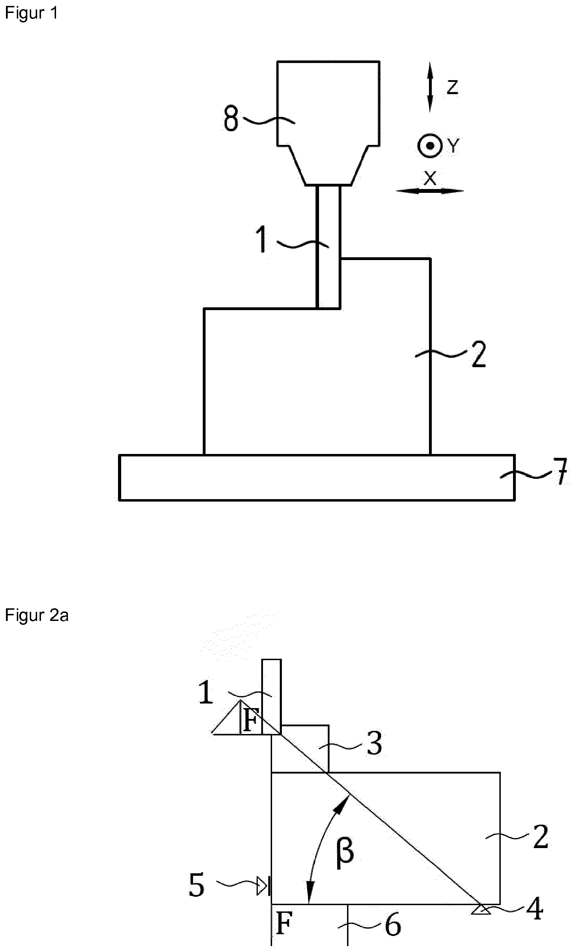

Figur 1 zeigt eine Spindel 8, in der ein Fräser 1 eingespannt ist. Mit dem Fräser 1 wird ein Werkstück 3 bearbeitet, welches auf einem Maschinentisch 7 fixiert ist. Die Spindel 8 selbst wird von einem nicht dargestellten Elektromotor angetrieben. Der Fräser 1 kann sich während des Fräsvorgangs relativ zum Werkstück in X, Y, und Z-Richtung (vergleiche die dargestellten kartesischen Koordinaten) bewegen. Üblicherweise ist das Werkstück 3 entweder direkt oder indirekt fest mit dem Maschinentisch 7 verbunden.

Figur 2a zeigt in schematischer Darstellung die erfindungsgemäße Anordnung des Fräsers 1, des Werkstücks 3, einer verwindungssteifen Vorrichtung 2 und dem Maschinentisch 7mittels eines Festlagers 4 und eines Loslagers 5. Durch diese Anordnung wird das Werkstück 3 zwar in X und Y-Richtung vollkommen fixiert, während es in Z-Richtung aufgrund einer gewissen Biegsamkeit der verwindungssteifen Vorrichtung 2 in sehr geringem Maße gegen elastische Rückstellkräfte beweglich ist. Diese in Z-Richtung wirkende Kraft wird von einer Kraftmesseinrichtung 6 aufgenommen.

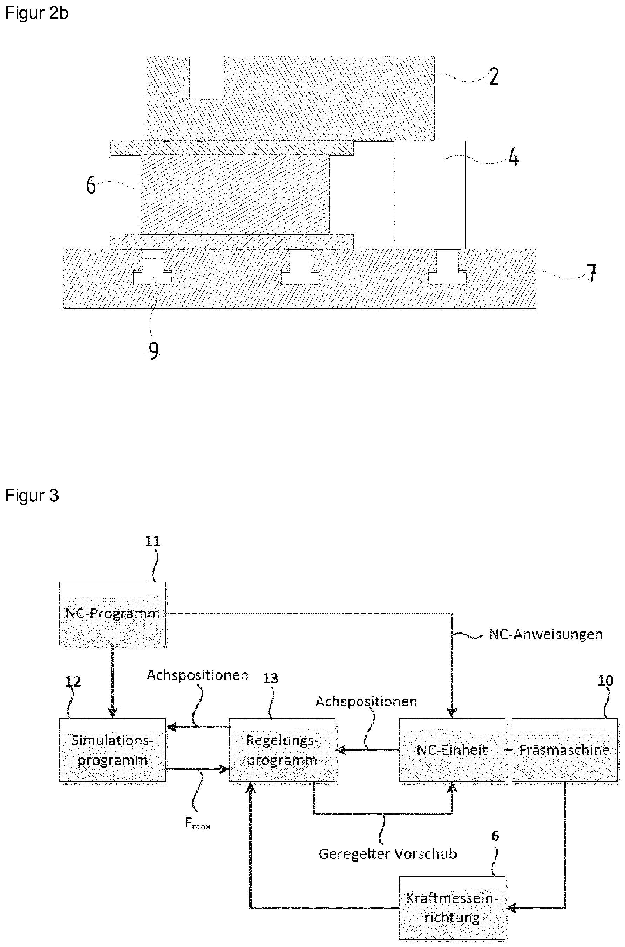

Figur 2b zeigt eine mögliche Ausführungsform der Lagerung der verwindungssteifen Vorrichtung 2 auf der Kraftmesseinrichtung 6, die einerseits vom Festlager 4 geleistet wird, welches eine Verdrehung der verwindungssteifen Vorrichtung 2 sowohl in X- als auch in Y-Richtung verhindert. Andererseits erlaubt das nicht dargestellte Loslager 5 eine sehr geringe Auslenkung der verwindungssteifen Vorrichtung 2 in Z-Richtung. Die Kraftmesseinrichtung 6 ist mittels sogenannter Nutensteine 9 fest mit dem Maschinentisch verbunden. Damit nimmt die Kraftmesseinrichtung 4 die vom Fräser 1 verursachten und von der verwindungssteifen Vorrichtung 2 Druck- oder Zugkräfte auf. Die Messung dieser Kräfte kann dabei auf der Grundlage von Dehnmessstreifen oder des piezoelektrischen Effekts erfolgen.

Für den Aufbau gemäß Figur 2a lassen sich neben dem Betrag der vektoriellen Kraft auch deren verbleibenden zwei Komponenten in X- und Y-Richtung berechnen. Voraussetzung dafür ist die Bestimmung der Lage der Zähne in Bezug auf den Mittelpunkt des vom Fräser 1 bei seiner Drehung beschriebenen Kreises in Abhängigkeit der Zeit. Diese ergibt sich zu:

$$X(t,z) = -\cos\left(\left(t - z \cdot \frac{t_{ges}}{N_Z}\right) \cdot \frac{2\pi}{t_{ges}}\right) = -\cos\left(t \cdot \frac{2\pi}{t_{ges}} - z \cdot \frac{2\pi}{N_Z}\right) \qquad \text{(Formel 1)}$$

X entspricht der X-Komponente der Lage eines bestimmten Zahnes z in Bezug auf den Fräsermittelpunkt in Abhängigkeit der Zeit t und $t_{ges}$ die Zeitdauer für eine volle Umdrehung des Fräsers 1, wobei folgende Beziehung besteht:

$$t_{ges} = \frac{1}{Drehzahl \cdot 60}.$$ $N_Z$ die Zahl der Zähne des Fräsers 1.

Sofern ein bestimmter Zahn des Fräsers 1 zerspanend wirkt, gilt für diesen unter der Voraussetzung, dass der Fräser 1 voll schneidet, stets folgende Bedingung:

$$\sin\left(t \cdot \frac{2\pi}{t_{ges}} - z \cdot \frac{2\pi}{N_Z}\right) > 0 \qquad \text{(Formel 2)}$$

Da der Fräser 1 in der Draufsicht als idealer Kreis betrachtet werden kann, kann er mit dem Satz des Pythagoras durch $f(x) = \sqrt{1 - x^2}$ beschrieben werden.

Die Richtung der an einem Zahn wirkenden Kraft ist gleich der Steigung m an diesem Kreis.

$$f'(x) = m(x) = \frac{1}{2\sqrt{1 - x^2}} \cdot (-2x) = -\frac{x}{\sqrt{1 - x^2}} \qquad \text{(Formel 3)}$$

So lässt sich über den Satz des Pythagoras und der Definition der Steigung m die Kraft auf Vektoren $F_x$ und $F_y$ in X beziehungsweise Y-Richtung zerlegen:

$$F_x = \sqrt{\frac{F_C^2}{1 + m^2}}$$

$$F_y = \sqrt{\frac{F_C^2}{1 + \frac{1}{m^2}}}$$

$F_c$ ist dabei der Betrag der auf den Zahn wirkenden Schnittkraft, die nach bekannten Formeln aus Tabellenbüchern (beispielsweise aus dem eingangs genannten Tabellenbuch Metall) berechnet werden kann. Die gesamte Kraft auf den betreffenden Zahn des Fräsers 1 ist die vektorielle Summe der beiden vorstehenden Komponenten. Die gesamte auf den Fräser 1 einwirkende Kraft ergibt sich aus der vektoriellen Summe der auf alle seine Zähne wirkenden Kraftkomponenten.

Aus den Lagekoordinaten des Fräsers 1 in Bezug auf das Festlager 4 (Figur 2a und 2b) und den auf den Fräser 1 wirkenden Kraftkomponenten $F_x$ und $F_y$ lässt sich die theoretisch wirkende Kraft zwischen Schraubstock 2 und Maschinentisch 7 berechnen. Zunächst lässt sich aus diesen Lagekoordinaten der Winkel β (Figur 2a) ausrechnen, in dem der Fräser zum Festlager 4 steht. Mithilfe dieses Winkels lässt sich die Kraft in zwei Komponenten zerlegen, wobei eine Komponente $F_{fest}$ vollständig von dem Festlager 4 aufgenommen wird und nur die andere Komponente $F_{wirk}$ auf die Kraftmesseinrichtung 6 einwirkt. Diese Kraft kann nun ihrerseits wiederum in zwei Komponenten aufgeteilt werden, von denen eine parallel zum Maschinentisch 7 verläuft und die andere senkrecht zu diesem, wobei nur die senkrechte Komponente $F_{druck}$ von der Kraftmesseinrichtung 6 gemessen wird.

Bei einem bestimmten Winkel β variiert die Komponente $F_{druck}$ proportional zur tatsächlich auf den Fräser 1 über alle seine Zähne einwirkenden gesamten Kraft, sodass aus $F_{druck}$ auf die tatsächlichen auf den Fräser 1 wirkenden Kräfte geschlossen werden kann. Die Kraft $F_{druck}$ ist somit ein geeignetes Kriterium für die Regelung des Vorschubs, mit dem der Fräser 1 das Werkstück 3 bearbeitet und erlaubt damit dessen belastungsabhängige Veränderung. Eine solche Veränderung kann aufgrund der Tatsache, dass es sich bei $F_{druck}$ um eine reine Betragsgröße handelt entsprechend schnell ausgewertet werden, sodass eine Veränderung des Vorschubs nahezu in Echtzeit vorgenommen werden kann.

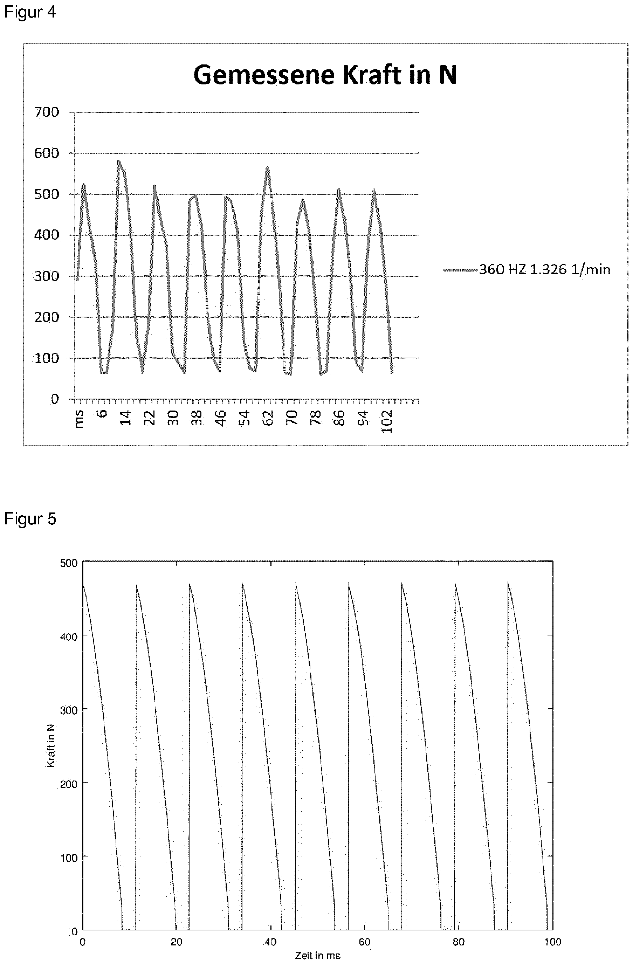

Figur 4 zeigt den theoretischen Verlauf von $F_{druck}$ für einen bestimmten einfachen Fräsvorgang, während Figur 5 den tatsächlich von der Kraftmesseinrichtung gemessenen zeitlichen Kraftverlauf darstellt. Aus dem Vergleich der beiden Figuren ergibt sich eine weitgehende Übereinstimmung des mathematisch simulierten Kraftverlaufs mit dem zeitlichen Verlauf der tatsächlichen gemessenen Kraft.

Die Auswertung von $F_{druck}$ und die Regelung des Vorschubs erfolgt auf folgende Weise:

Zur Herstellung eines bestimmten Werkstücks3 wird wie folgt verfahren:

Die ohnehin in der Steuerungseinrichtung der Fräsmaschine 10 bereits vor Beginn eines Arbeitsvorgangs gespeicherten Daten, insbesondere das Bearbeitungsprogramm und die sogenannte Werkzeugtabelle werden ausgelesen und einem Simulationsprogramm 12 übergeben.

Als weiterer Schritt berechnet das Simulationsprogramm 12 aus dem NC-Programm 11 die vom Fräser 1 bei der Bearbeitung eines Werkstücks 3 angefahrenen Koordinaten in einem festgelegten Abstand, wobei sich ein Abstand von jeweils 0,2mm als besonders geeignet erwiesen hat. Auf der Grundlage der Koordinaten und der sich aus dem Bearbeitungsprogramm ergebenden Geometrie des Werkstücks 3 wird dann das abgetragene Volumen zwischen jeweils zwei benachbarten Koordinatenpunkten berechnet. Die so errechneten Volumina sind Grundlage für eine erste Optimierung des jeweiligen Vorschubes zwischen zwei Koordinatenpunkten, nachstehend als Richtvorschub bezeichnet.

Ein weiterer Schritt zur Optimierung besteht darin, dass die aus dem eingangs genannten Tabellenbuch Metall entnehmbare sogenannte maximale spezifische Schnittkraft in die oben genannten Formeln 1-3 eingesetzt wird und daraus eine maximale Kraftkomponente $F_{max}$ für alle Koordinatenpunkte berechnet wird.

Diese Werte stehen dem erfindungsgemäßen Regelungsprogramm 13 zur Regelung des Vorschubs des Fräsers zur Verfügung. Im Einzelnen sind dies für jeden Koordinatenpunkt (durch seine X-, Y- und Z-Koordinate bestimmt) die maximal zulässige Kraft $F_{max}$ und ein Richtvorschub.

Die Regelung des tatsächlichen Vorschubs geschieht auf folgende Weise:

Zunächst wird einerseits eine Datenverbindung zwischen der Steuereinrichtung der Fräsmaschine 10 und dem erfindungsgemäßen Regelungsprogramm 13 und andererseits zwischen der Kraftmesseinrichtung 6 und dem Regelungsprogramm 13 hergestellt. Diese dient zur Übertragung der aktuellen Achsenpositionen der Fräsmaschine 10 und der Übertragung von vom Regelungsprogramm 13 berechneten optimierten Vorschubwerten.

Die optimierten Vorschubwerte werden wie folgt ermittelt:

Für die Ermittlung des Vorschubs bei einer bestimmten Achsposition der Fräsmaschine 10 werden zunächst der entsprechende Richtvorschub sowie die dazugehörige maximal zulässige Kraft $F_{max}$ aus dem Simulationsprogramm 12 aufgerufen. Danach wird die von der Kraftmesseinrichtung 6 ermittelte Kraft $F_{mess}$ mit der maximal zulässigen Kraft $F_{max}$ verglichen. Für den Fall, dass die von der Kraftmesseinrichtung 6 ermittelte Kraft $F_{mess}$ noch unterhalb der maximal zulässigen Kraft $F_{max}$ liegt, wird mittels eines sogenannten PID-Reglers der Vorschub solange erhöht, bis entweder der Richtvorschub erreicht wird oder die von der Kraftmesseinrichtung 6gemessenen Kraft $F_{mess}$ die maximal zulässige Kraft $F_{max}$ erreicht hat. Diese Regelung des Vorschubs erfolgt periodisch, beispielsweise im Abstand von 0,01 Sekunden.

Für den Fall, dass für einen bestimmten Koordinatenpunkt des Fräsers 1 die von der Kraftmesseinrichtung 6 gemessenen Kraft $F_{mess}$ bereits über der vom Simulationsprogramm 12 ermittelten maximal zulässigen Kraft $F_{max}$ liegt, wird wiederum mithilfe des PID-Reglers der Vorschub solang verringert, bis die gemessene Kraft $F_{mess}$ wieder unterhalb der maximal zulässigen Kraft $F_{max}$ liegt.

Die soweit beschriebene Regelung des Vorschubs bezieht noch keine aus Versuchen gewonnenen Erfahrungswerte mit ein und ist dementsprechend volatil. Die Berücksichtigung von Versuchen zur Glättung der Vorschubregelung geschieht auf folgende Weise:

Der Verlauf der Regelung des Vorschubs in Abhängigkeit der Koordinatenpunkte des Fräsers 1 bei einem ersten Durchlauf durch ein bestimmtes Werkstück 3 wird im Regelungsprogramm 13 hinterlegt. Ebenso werden für alle Koordinatenpunkte des Fräsers 1 die entsprechenden Werte der gemessenen Kraft $F_{mess}$ hinterlegt. Bei allen folgenden Durchläufen durch dasselbe Werkstück 3 wird dieser Verlauf insofern berücksichtigt, als bereits vor Eintritt einer größeren bevorstehenden Belastung des Fräsers1 bei nachfolgenden vom Fräser 1 angefahrenen Koordinatenpunkten der Vorschub bereits vorausschauend reduziert wird, womit Spitzenbelastungen des Fräsers1vermieden werden.

Was das Regelintervall von 0,01 Sekunden angeht, so hat sich dieser Wert als geeignet erwiesen, da erfahrungsgemäß damit praktisch alle notwendig werdenden Änderungen des Vorschubs erfasst werden können. Außerdem hält sich bei diesem Regelintervall der zeitliche Aufwand für die Durchführung der Simulation vor Beginn des Fräsvorgangs in Grenzen.

Sollte es während des Fräsvorgangs zu vom Fräser 1 ausgelösten Schwingungen kommen, die zur Qualitätsverminderungen des hergestellten Werkstückes 3 führen können und auch die Standzeit des Fräsers 1 verkürzen, so werden solche Schwingungen ebenfalls von der Kraftmesseinrichtung6 erfasst. Dies geschieht auf die Weise, dass die gemessene Kraft $F_{mess}$ laufend auf den Abstand zwischen ihren in Figur 3 erkennbaren lokalen Maxima und Minima hin überprüft wird. Eine mögliche Maßnahme zur Dämpfung einer derart erkannten Schwingung besteht darin, den Vorschub kurzzeitig - beispielsweise für eine halbe Schwingungsperiode - auszusetzen. Die Zeitdauer einer Schwingungsperiode ergibt sich aus der Drehzahl des Fräsers 1 sowie der Anzahl von dessen Zähnen.

Bezugszeichenliste

1 = Fräser
2 = verwindungssteife Vorrichtung, Schraubstock
3 = Werkstück
4 = Festlager
5 = Loslager
6 = Kraftmesseinrichtung
7 = Maschinentisch
8 = Spindel
9 = Nutenstein
10 = Fräsmaschine
11 = NC-Programm
12 = Simulationsprogramm
13 = Regelungsprogramm

**Patentansprüche**

1. Steuereinrichtung für eine CNC-Fräsmaschine (10) mit einer Vorrichtung zur Regelung des Vorschubs von deren rotierenden Fräser (1), der ein durch eine verwindungssteife Vorrichtung (2) ortsfest fixiertes Werkstück (3) bearbeitet, **dadurch gekennzeichnet, dass** die verwindungssteife Vorrichtung (2) ein Fest (4)- und ein Loslager (5) aufweist, wobei zwischen Festlager (4) und Fräser (1) ein wählbarer Abstand herrscht und wobei sich beim Loslager (5) in definiertem Abstand zum Festlager (4) eine Kraftmesseinrichtung (6) für die während des Fräsvorgangs auf den Fräser (1) einwirkenden mechanischen Kräfte befindet, wodurch die auf den Fräser (1) einwirkenden Kräfte auf eine Dimension abgebildet werden, dass die auf diese Weise erhaltene eindimensionale Kraft sowohl auf ihren absoluten Wert als auch auf ihr Schwingungsverhalten untersucht und mit hinterlegten Daten verglichen wird und dass die Regelung des Vorschubs nahezu in Echtzeit in der Weise erfolgt, dass sich die eindimensionale Kraft stets so weit wie möglich den dazu hinterlegten Daten folgt.

2. Steuereinrichtung nach Anspruch 1, **dadurch gekennzeichnet, dass** der Vergleich der Messwerte der eindimensionalen Kraft mit den hinterlegten Daten zur Regelung des Vorschubs in der Weise erfolgt, dass periodisch geprüft wird, ob die von der Kraftmesseinrichtung (6) gemessene Kraft noch unterhalb des aus den mathematischen Modellen erhaltenen Wertes liegt und gegebenenfalls der Vorschub erhöht wird, während anderenfalls der Vorschub soweit verringert wird, bis die gemessene Kraft wieder unterhalb der maximal zulässigen Kraft liegt.

3. Steuereinrichtung nach Anspruch 1, **dadurch gekennzeichnet, dass** die hinterlegten Daten sowohl durch experimentelle Fräsvorgänge als auch auf von Werkzeugherstellern übernommenen Richtwerten aufbauenden mathematischen Modellengewonnen werden.

4. Steuereinrichtung nach Anspruch 1, **dadurch gekennzeichnet, dass** das von der Kraftmesseinrichtung (6) aufgenommene Schwingungsverhalten laufend auf seine Amplitude überprüft wird, um ab einem bestimmten Grenzwert der Amplitude den Vorschub des Fräsers (1) so zu verändern, dass eine Abnahme der Amplitude eintritt.

5. Steuereinrichtung nach Anspruch 1, **dadurch gekennzeichnet, dass** der von der Kraftmesseinrichtung (6) aufgenommene Absolutwert der eindimensionalen Kraft während des Fräsvorgangs laufend auf seinen Betrag überprüft wird und bei über bzw. unterschreiten eines von der Lage des Fräsers (1) in Bezug auf das Festlager (4) abhängigen wählbaren oberen und unteren Grenzwertes den Vorschub des Fräsers (1) senkt bzw. steigert.

6. Steuereinrichtung nach Anspruch 1, **dadurch gekennzeichnet, dass** die Kraftmesseinrichtung (6) auf der Grundlage von Dehnmessstreifen oder des piezoelektrischen Effekts arbeitet und dass die eindimensionale Kraft zwischen der verwindungssteifen Vorrichtung (2) und dem Maschinentisch (7) gemessen wird.

7. Steuereinrichtung nach Anspruch 2, **dadurch gekennzeichnet, dass** die periodische Überprüfung in einem Zeitabstand zwischen 0,01 und 0,1 Sekunden erfolgt.

Figur 1

Figur 2a

Figur 2b

Figur 3

Figur 4

**Gemessene Kraft in N**

360 HZ 1.326 1/min

Figur 5

**Europäisches Patentamt**

**European Patent Office**

**Office européen des brevets**

# EUROPÄISCHER RECHERCHENBERICHT

**Nummer der Anmeldung**

EP 17 15 5768

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 2013/150905 A1 (HITACHI LTD [JP]) 10. Oktober 2013 (2013-10-10) * das ganze Dokument * ----- | 1-7 | INV. G05B19/416 |
| A | US 5 072 550 A (MATSUMOTO YASUTAMI [JP]) 17. Dezember 1991 (1991-12-17) * Spalte 4, Zeilen 9-17; Abbildung 3 * ----- | 1-7 | |

**RECHERCHIERTE SACHGEBIETE (IPC)**

G05B

Der vorliegende Recherchenbericht wurde für alle Patentansprüche erstellt

| Recherchenort | Abschlußdatum der Recherche | Prüfer |
|---|---|---|
| Den Haag | 22. August 2017 | Salvador, Didier |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes
  Dokument

EPO FORM 1503 03.82 (P04C03)

## ANHANG ZUM EUROPÄISCHEN RECHERCHENBERICHT
### ÜBER DIE EUROPÄISCHE PATENTANMELDUNG NR.

EP 17 15 5768

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-08-2017

| Im Recherchenbericht angeführtes Patentdokument | Datum der Veröffentlichung | Mitglied(er) der Patentfamilie | Datum der Veröffentlichung |
|---|---|---|---|
| WO 2013150905 A1 | 10-10-2013 | JP 2013215809 A<br>WO 2013150905 A1 | 24-10-2013<br>10-10-2013 |
| US 5072550 A | 17-12-1991 | GB 2239619 A<br>JP 2940027 B2<br>JP H03166055 A<br>US 5072550 A | 10-07-1991<br>25-08-1999<br>18-07-1991<br>17-12-1991 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4078195 A
- DE 102005041175 A1

**In der Beschreibung aufgeführte Nicht-Patentliteratur**

- Europa Lehrmittel Tabellenbuch Metall